# EUROPEAN PATENT APPLICATION

(11) **EP 3 361 810 A1**
(43) Date of publication of application: **15.08.2018**
(21) Application number: 16888821.2
(22) Date of filing: 05.02.2016
(51) Int. Cl.: H04W 72/12

(54) **SERVICE TRANSMISSION METHOD, AND COMMUNICATION APPARATUS**

(71) Applicant: Guangdong Oppo Mobile Telecommunications Corp., Ltd., Dongguan, Guangdong 523860 (CN)
(72) Inventor: FENG, Bin, Dongguan Guangdong 523860 (CN)
(74) Representative: Manitz Finsterwald Patentanwälte PartmbB
(86) International application number: PCT/CN2016/073671
(87) International publication number: WO 2017/132996

(57) **Abstract**

Provided in embodiments of the present application are a service transmission method and device. The method comprises: a terminal apparatus determines an adjustment offset used to adjust a first scheduling period of a first service of the terminal apparatus; the terminal apparatus adjusts, according to the adjustment offset, the first scheduling period to obtain a second scheduling period; and the terminal apparatus sends, according to the second scheduling period, data of the first service. The embodiments of the present application can prevent a service resource conflict.

## Description

### TECHNICAL FIELD

The present application relates to the field of communications, and more particularly to a service transmission method and a communication device.

### BACKGROUND

With the development of communication technologies, multiple scheduling manners have been provided, such as dynamic scheduling, static scheduling, semi-static scheduling, and the like.

The semi-static scheduling may also be referred to as semi-persistent scheduling, that is, resources are allocated to users according to a particular period, such that the resource allocation in this period does not require an indication for scheduling signaling. Compared with the dynamic scheduling, the semi-static scheduling manner has poorer flexibility but lower control signaling overheads. Therefore, this manner is applicable to services which have a non-obvious burst feature and require a guaranteed rate, such as the Voice over Internet Protocol (VoIP) service, the Voice over Long Term Evolution (VoLTE) service, and the like.

The wide application of the semi-static scheduling period may incur various problems, such as a service conflict problem in the semi-static scheduling period.

An urgent problem to be solved is how to solve the service conflict problem in the semi-static scheduling period is in.

### SUMMARY

Embodiments of the present application provide a service transmission method and apparatus, which can avoid a resource conflict between services.

A first aspect provides a service transmission method, including the following operations.

A terminal device determines an adjustment offset for adjusting a first scheduling period of a first service of the terminal device.

The terminal device adjusts the first scheduling period based on the adjustment offset to obtain a second scheduling period.

The terminal device sends data of the first service according to the second scheduling period.

In combination with the first aspect, in a first possible implementation of the first aspect, before the operation that the terminal device determines the adjustment offset, the method may further include the following operation.

It is determined that a resource conflict occurs between first data of the first service and data of a second service at a first time domain sending position.

The operation that the terminal device sends data of the first service according to the second scheduling period includes the following operations.

A second time domain sending position is determined according to the second scheduling period.

The first data is sent at the second time domain sending position.

In combination with the first possible implementation of the first aspect, in a second possible implementation of the first aspect, the operation that the terminal device determines the adjustment offset includes the following operation.

The terminal device determines the adjustment offset according to a priority level of the first service between the first service and the second service.

In combination with the second possible implementation of the first aspect, in a third possible implementation of the first aspect, the method may further include the following operations.

A third scheduling period is determined, where a difference value between the first scheduling period and the third scheduling period is equal to that between the second scheduling period and the first scheduling period.

Second data of the first service is sent according to the third scheduling period, where the second data is data that is sent for the first time after the first data.

In combination with the third possible implementation of the first aspect, in a fourth possible implementation of the first aspect, the method may further include the following operation.

Third data of the first service is sent according to the first scheduling period after the second data is sent, where the third data is data sent after the second data.

In combination with the first aspect or any of the foregoing possible implementations, in a fifth possible implementation of the first aspect, the method may further include the following operation.

The terminal device receives a first configuration message sent by a network device, where the first configuration message is used to indicate at least one of the following: a value of the adjustment offset, or the adjustment offset is applied in a first application.

In combination with the first aspect or any of the foregoing possible implementations, in a sixth possible implementation of the first aspect, the method may further include the following operation.

The terminal device receives a second configuration message sent by the network device, where the second configuration message is used to indicate at least one of the following: a priority order of the first service and the second service, or a value of the adjustment offset.

In combination with the first aspect or any of the foregoing possible implementations, in a seventh possible implementation of the first aspect, before the operation that the terminal device determines the adjustment offset, the method may further include the following operation.

The terminal device receives an activation message sent by the network device, where the activation message is used to activate the terminal device to adjust the first scheduling period.

In combination with the first aspect or any of the foregoing possible implementations, in an eighth possible implementation of the first aspect, before the operation that the terminal device determines the adjustment offset, the method may further include the following operation.

The terminal device determines a first time frequency resource for sending the data of the first service according to the second scheduling period, such that the data of the first service is sent according to the second scheduling period by using the first time frequency resource, where the first time frequency resource includes a frequency domain resource for sending the data of the first service according to the second scheduling period and a time domain resource in a sub-frame corresponding to the second scheduling period.

In combination with the first aspect or any of the foregoing possible implementations, in a seventh possible implementation of the first aspect, the operation that the terminal device determines the first time frequency resource for sending the data of the first service according to the second scheduling period includes the following.

The terminal device determines a time frequency resource sent by the network device in a physical downlink control channel as the first time frequency resource.

Alternatively, the terminal device selects the first time frequency resource from a resource pool.

Alternatively, a second time frequency resource are determined as the first time frequency resource, where the second time frequency resource includes a frequency domain resource for sending the data of the first service according to the first scheduling period and a time domain resource in a sub-frame corresponding to the first scheduling period.

In combination with the first aspect or any of the foregoing possible implementations, in a seventh possible implementation of the first aspect, the method may further include the following operations.

The terminal device sends indication information to a receiving end of the data of the first service, where the indication information is used to indicate the value of the adjustment offset.

The indication information is carried in a physical control channel.

Alternatively, the indication information is carried in a reserved bit of a physical channel.

Alternatively, the indication information is carried in a specific Media Access Control (MAC) control element (CE).

Alternatively, the indication information is carried in a system broadcast message.

A second aspect provides a service transmission method, including the following operations.

A terminal device determines an adjustment offset.

The terminal device adjusts a first time domain start position according to the adjustment offset to obtain a second time domain start position, where the first time domain start position is a preset time domain start position at which service data is sent according to a scheduling period.

The terminal device sends the service data from the second time domain start position according to the scheduling period.

In combination with the second aspect, in a first possible implementation of the second aspect, the operation that the terminal device determines the adjustment offset includes the following operation.

The terminal device determines the adjustment offset from a value range, where the value range includes multiple values.

In combination with the second aspect or the first possible implementation thereof, in a second possible implementation of the second aspect, the method may further include the following operations.

The terminal device sends indication information to a receiving end of the service data, where the indication information is used to indicate a value of the adjustment offset.

The indication information is carried in a physical control channel.

Alternatively, the indication information is carried in a reserved bit of a physical channel.

Alternatively, the indication information is carried in a specific Media Access Control (MAC) control element (CE).

Alternatively, the indication information is carried in a system broadcast message.

A third aspect provides a service transmission method, including the following operations.

An adjustment offset is determined, where the adjustment offset is used to adjust a first scheduling period of a first service of a terminal device.

The first scheduling period is adjusted according to the adjustment offset to obtain a second scheduling period.

Data of the first service sent by the terminal device is received according to the second scheduling period.

In combination with the third aspect, in a first possible implementation thereof, before the determining an adjustment offset, the method may further include the following operations.

Indication information sent by the terminal device is received, where the indication information is used to indicate a value of the adjustment offset.

The indication information is carried in a physical control channel.

Alternatively, the indication information is carried in a reserved bit of a physical channel.

Alternatively, the indication information is carried in a specific Media Access Control (MAC) control element (CE).

Alternatively, the indication information is carried in a system broadcast message.

The operation of determining the adjustment offset includes: the adjustment offset is determined according to the indication information.

A fourth aspect provides a service transmission method, including the following operations.

An adjustment offset is determined.

A first time domain start position is adjusted according to the adjustment offset to obtain a second time domain start position, where the first time domain start position is a preset time domain start position at which service data sent by a terminal device is received according to a scheduling period.

The service data sent by the terminal device is received according to the scheduling period from the second time domain start position.

In combination with the fourth aspect, in a first possible implementation of the fourth aspect, before the determining an adjustment offset, the method may further include the following operations.

Indication information sent by the terminal device is received, where the indication information is used to indicate a value of the adjustment offset.

The indication information is carried in a physical control channel.

Alternatively, the indication information is carried in a reserved bit of a physical channel.

Alternatively, the indication information is carried in a specific Media Access Control (MAC) control element (CE).

Alternatively, the indication information is carried in a system broadcast message.

The operation of determining the adjustment offset includes: the adjustment offset is determined according to the indication information.

In the embodiments of the present application, an adjustment offset is determined, and duration of a scheduling period or a time domain start position of the scheduling period is adjusted according to the adjustment offset, thus avoiding a resource conflict between services.

A fifth aspect provides a terminal device, configured to perform the method in the first aspect or any possible implementation of the first aspect. Specifically, the terminal device includes units configured to perform the method in the first aspect or any possible implementation of the first aspect.

A sixth aspect provides a terminal device, configured to perform the method in the second aspect or any possible implementation of the second aspect. Specifically, the terminal device includes units configured to perform the method in the second aspect or any possible implementation of the second aspect.

A seventh aspect provides a communication device, configured to perform the method in the third aspect or any possible implementation of the third aspect. Specifically, the communication device includes units configured to perform the method in the third aspect or any possible implementation of the third aspect.

An eighth aspect provides a communication device, configured to perform the method in the fourth aspect or any possible implementation of the fourth aspect. Specifically, the communication device includes units configured to perform the method in the fourth aspect or any possible implementation of the fourth aspect.

A ninth aspect provides a terminal device, including a memory and a processor, where the memory is configured to store instructions and the processor is configured to execute the instructions stored in the memory. When the processor executes the instructions stored in the memory, the processor is instructed to perform the method in the first aspect or any possible implementation of the first aspect.

A tenth aspect provides a terminal device, including a memory and a processor, where the memory is configured to store instructions and the processor is configured to execute the instructions stored in the memory. When the processor executes the instructions stored in the memory, the processor is instructed to perform the method in the second aspect or any possible implementation of the second aspect.

An eleventh aspect provides a communication device, including a memory and a processor, where the memory is configured to store instructions and the processor is configured to execute the instructions stored in the memory. When the processor executes the instructions stored in the memory, the processor is instructed to perform the method in the third aspect or any possible implementation of the third aspect.

A twelfth aspect provides a communication device, including a memory and a processor, where the memory is configured to store instructions and the processor is configured to execute the instructions stored in the memory. When the processor executes the instructions stored in the memory, the processor is instructed to perform the method in the fourth aspect or any possible implementation of the fourth aspect.

A thirteenth aspect provides a computer storage medium, where the computer storage medium stores a program code, and the program code is used to give an instruction to perform the method in the first aspect or any possible implementation of the first aspect.

A fourteenth aspect provides a computer storage medium, where the computer storage medium stores a program code, and the program code is used to give an instruction to perform the method in the second aspect or any possible implementation of the second aspect.

A fifteenth aspect provides a computer storage medium, where the computer storage medium stores a program code, and the program code is used to give an instruction to perform the method in the third aspect or any possible implementation of the third aspect.

A sixteenth aspect provides a computer storage medium, where the computer storage medium stores a program code, and the program code is used to give an instruction to perform the method in the fourth aspect or any possible implementation of the fourth aspect.

In the embodiments of the present application, an adjustment offset is determined, and the duration of a scheduling period and a time domain start position at which the scheduling period is used are adjusted according to the adjustment offset, thus avoiding a resource conflict between services.

### BRIEF DESCRIPTION OF DRAWINGS

To describe the technical solutions in the embodiments of the present application more clearly, the drawings required for describing the embodiments or the prior art will be simply introduced below. Apparently, the drawings in the following description show merely some embodiments of the present application, and other drawings may further be obtained by those skilled in the art according to these drawings without creative work.
FIG. 1 is a diagram illustrating a communication application scenario according to an embodiment of the present application;
FIG. 2 is a schematic flowchart of a service transmission method according to an embodiment of the present application;
FIG. 3 is an application scenario diagram according to an embodiment of the present application;
FIG. 4 is a schematic diagram illustrating that a service transmission method according to an embodiment of the present application is applied in a scenario illustrated in FIG. 3;
FIG. 5 is an application scenario diagram according to an embodiment of the present application;
FIG. 6 is a schematic flowchart of a service transmission method according to an embodiment of the present application;
FIG. 7 is a schematic flowchart of a service transmission method according to an embodiment of the present application;
FIG. 8 is a schematic diagram illustrating that a service transmission method according to an embodiment of the present application is applied in a scenario illustrated in FIG. 5;
FIG. 9 is a schematic flowchart of a service transmission method according to an embodiment of the present application;
FIG. 10 is a schematic block diagram of a terminal device according to an embodiment of the present application;
FIG. 11 is a schematic block diagram of a terminal device according to an embodiment of the present application;
FIG. 12 is a schematic block diagram of a communication device according to an embodiment of the present application;
FIG. 13 is a schematic block diagram of a communication device according to an embodiment of the present application;
FIG. 14 is a schematic block diagram of a terminal device according to an embodiment of the present application;
FIG. 15 is a schematic block diagram of a terminal device according to an embodiment of the present application;
FIG. 16 is a schematic block diagram of a communication device according to an embodiment of the present application; and
FIG. 17 is a schematic block diagram of a communication device according to an embodiment of the present application.

### DETAILED DESCRIPTION

The technical solutions of the embodiments of the present application are clearly and completely described below In combination with the drawings of the embodiments of the present application. Apparently, the described embodiments are some rather than all of the embodiments of the present application. All other embodiments obtained by those of ordinary skill in the art based on the embodiments of the present application without creative work shall fall within the protection scope of the present application.

The terms "component", "module", "system" and the like, as used in this specification, are used to refer to a computer-related entity, hardware, firmware, a combination of hardware and software, software, or software in execution. For example, the component may be, but not limited to, a process running on a processor, a processor, an object, an executable file, a thread of execution, a program, and/or a computer. Applications running on computing devices, and the computing devices can all be components according to the drawings. One or more components may reside in a process and/or a thread of execution, and the components may be located on one computer and/or distributed between two or more computers. In addition, these components may execute operations from various computer readable media in which various data structures are stored. The components may communicate via local and/or remote processes based on, for example, signals having one or more data packets (for example, data from two components interacting with another component between a local system, a distributed system, and/or a network; for another example, the Internet interacting with other systems via signals).

The solutions in the embodiments of the present application are applicable to existing cellular communication systems, such as Global System for Mobile Communication (GSM), Wideband Code Division Multiple Access (WCDMA), Long Term Evolution (LTE) systems and the like. The supported communications are mainly for voice and data communications. Generally, a traditional base station supports a limited number of connections, and it is easy to implement the connections.

Next-generation mobile communications systems not only support traditional communication, but also support Machine to Machine (M2M) communication, which is also referred to as Machine Type Communication (MTC). It is forecast that by 2020, MTC devices connected to the network will reach 50 to 100 billion, which far exceeds the current number of connections. For M2M services, because of the wide variety of services, there are great differences in network requirements. Generally, the following several requirements exist:
reliable transmission, but insensitive to latency; and
low delay and highly reliable transmission.

It is easy to process services that are reliable in transmission, but insensitive to latency. However, for services that are low in delay and highly reliable in transmission, such as Vehicle to Vehicle (V2V) services or Vehicle to Everything (V2X) services, short transmission delay and high reliability are both required. If the transmission is not reliable, retransmission is required, and consequently the transmission delay is lengthened, thus failing to meet the requirements.

The existence of the numerous connections causes a large difference between a future communications system and an existing communications system. The numerous connections need to consume more resources to access a terminal device, and need to consume more resources for the transmission of scheduling signaling related to the data transmission of the terminal device. The solutions in the embodiments of the present application can effectively solve the foregoing resource consumption problem.

The embodiments are described by using a terminal device and a network device in the present application.

The terminal device may also be referred to as user equipment (UE), an access terminal, a user unit, a user station, a mobile station, a distant station, a remote terminal, a mobile device, a user terminal, a terminal, a wireless communication device, a user agent, a user apparatus, or the like. The terminal device may be a station (ST) in the Wireless Local Area Network (WLAN); or may be a cellular phone, a cordless phone, a Session Initiation Protocol (SIP) phone, a Wireless Local Loop (WLL) station, a Personal Digital Assistant (PDA), a handheld device with a wireless communication function, a computing device or another processing device connected to a wireless modem, a vehicle-mounted device, a wearable device, a terminal device in a future 5G network or a terminal device in a future evolved Public Land Mobile Network (PLMN) network.

The network device may be a device for communicating with the terminal device. The network device may be an access point (AP) in the WLAN, or a Base Transceiver Station (BTS) in GSM or in Code Division Multiple Access (CDMA); may also be NodeB (NB) in WCDMA; or may also be evolved NodeB (eNodeB) in LTE, a relay station or an access point, a vehicle-mounted device, a wearable device, or a network device in a future 5G network or in a future evolved-PLMN network.

In addition, the aspects or features of the present application may be implemented as methods, apparatuses, or products made by using standard programming and/or engineering technologies. The term "product" used in the present application covers computer programs that can be accessed by any computer readable device, carrier, or medium. For example, the computer readable medium may include, but not limited to, a magnetic storage device (for example, a hard disk, floppy disk or tape), an optical disk (for example, a Compact Disk (CD), a Digital Versatile Disk (DVD), or the like), a smart card, and a flash memory device (for example, an Erasable Programmable Read-Only Memory (EPROM), or a card, stick or key driver). Additionally, various storage media described herein may represent one or more devices and/or other machine-readable media for storing information. The term "machine-readable medium" may include, but not limited to, wireless channels and various other media capable of storing, containing, and/or carrying instructions and/or data.

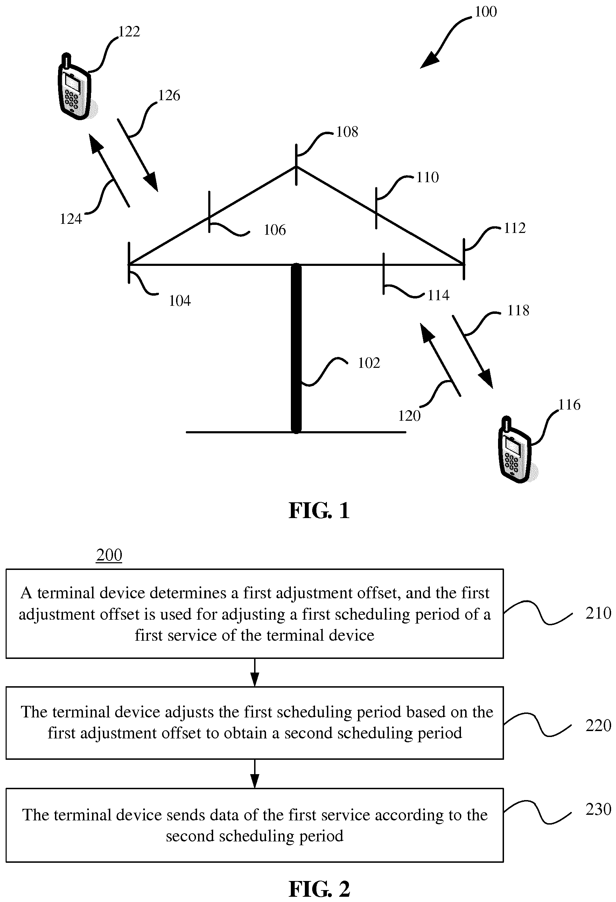

FIG. 1 is a schematic diagram of a communication system for information transmission according to the present application. As illustrated in FIG. 1, the communication system 100 includes a network device 102. The network device 102 may include multiple antennas, such as antennas 104, 106, 108, 110, 112, and 114. In addition, the network device 102 may additionally include a transmitter chain and a receiver chain. Those of ordinary skill in the art may understand that they both may include multiple components (for example, processors, modulators, multiplexers, demodulators, demultiplexers, antennas, or the like) related to signal sending and receiving.

The network device 102 may communicate with multiple terminal devices (for example, terminal devices 116 and 122). However, it may be understood that, the network device 102 may communicate with any number of terminal devices similar to the terminal device 116 or 122. The terminal device 116 or 122 may be, for example, a cellular phone, a smart phone, a portable computer, a handheld communication device, a handheld computing device, a satellite radio apparatus, a global positioning system, a PDA, and/or any other suitable device used for communication in the wireless communication system 100.

As illustrated in FIG. 1, the terminal device 116 communicates with the antennas 112 and 114, where the antennas 112 and 114 send information to the terminal device 116 through a forward link 118, and receive information from the terminal device 116 through a reverse link 120. In addition, the terminal device 122 communicates with the antennas 104 and 106, where the antennas 104 and 106 send information to the terminal device 122 through a forward link 124, and receive information from the terminal device 122 through a reverse link 126.

For example, in a Frequency Division Duplex (FDD) system, the forward link 118 may use a frequency band different from that used by the reverse link 120, and the forward link 124 may use a frequency band different from that used by the reverse link 126.

For another example, in a Time Division Duplex (TDD) system and a full duplex system, the forward link 118 and the reverse link 120 may use the same frequency band, and the forward link 124 and the reverse link 126 may use the same frequency band.

Each antenna (or an antenna group formed by multiple antennas) and/or region designed for communication is referred to as a sector of the network device 102. For example, the antenna group may be designed to communicate with terminal devices in sectors in a coverage region of the network device 102. In a process in which the network device 102 communicates with the terminal devices 116 and 122 through the forward links 118 and 124, a transmit antenna of the network device 102 may improve signal to noise ratios of the forward links 118 and 124 by means of beamforming. In addition, compared with a manner in which the network device sends a signal to all terminal devices by using a single antenna, when the network device 102 sends a signal to the terminal devices 116 and 122 randomly scattered in the related coverage region by means of beamforming, a mobile device in a neighboring cell suffers less interference.

Within a given period, the network device 102, and the terminal device 116 or 122 may be a wireless communication sending apparatus and/or wireless communication receiving apparatus. During data sending, the wireless communication sending apparatus may encode the data and then transmit the encoded data. Specifically, the wireless communication sending apparatus may acquire (for example, generate, receive from another communication apparatus, store in a memory or the like) a certain number of data bits to be sent to the wireless communication receiving apparatus through a channel. Such data bits may be contained in a transmission block (or multiple transmission blocks) of the data, where the transmission block may be segmented to form multiple code blocks.

In addition, the communication system 100 may be a PLMN network, a D2D network, an M2M network, a V2V network, a V2X network, or another network. FIG. 1 is merely an exemplary simplified schematic diagram. The network may further include other network devices, which are not illustrated in FIG. 1.

FIG. 2 is a schematic flowchart of a service transmission method 200 according to an embodiment of the present application. As illustrated in FIG. 2, the method 200 may include the following operations.

In 210, a terminal device determines an adjustment offset for adjusting a first scheduling period of a first service of the terminal device, where a duration of a second scheduling period is different from that of the first scheduling period.

In 220, the terminal device adjusts the first scheduling period to obtain a second scheduling period based on the adjustment offset.

In 230, the terminal device sends data of the first service according to the second scheduling period.

In the embodiment of the present application, a peer end of the terminal device may be a network device, or may also be another terminal device.

In the embodiment of the present application, at the data receiving end, a scheduling period may also be referred to as a sending period, which means a time interval between sending two adjacent data packets. If it is described that a data packet A is sent according to a scheduling period A, it indicates that a transmission time interval between the data packet A and a previous data packet is a transmission time interval corresponding to the scheduling period A.

The scheduling period in the embodiment of the present application may be referred to as a semi-persistent scheduling period or a semi-static scheduling period.

Optionally, in the embodiment of the present application, a network device may pre-configure an initial scheduling period, that is, the first scheduling period, of each service of the terminal device. The network device may further configure a value of an adjustment offset of the scheduling period to the terminal device. The value of the adjustment offset may be a value or a range (may also be referred to as an offset window). If it is a range, the terminal device may randomly select the adjustment offset from the value range.

Optionally, in the embodiment of the present application, the value of the adjustment offset may use a time slot as a unit, or may also use a sub-frame as a unit.

Optionally, in the embodiment of the present application, before the terminal device sends data of a service according to a scheduling period, the terminal device may first determine one or more time frequency resources to be used, where the one or more time frequency resources are used to indicate one or more frequency domain resources used to send the service and one or more time domain resources in sub-frames corresponding to the scheduling period of the service. For example, the terminal device determines that a carrier 1 and a time slot 1 are used to send the data of the service, and that a time domain interval corresponding to a current scheduling period is five sub-frames. As such, the terminal device may send the data of the service in the time slot 1 of the first sub-frame by using the carrier 1 and then send the data of the service in a time slot 6 of the sixth sub-frame by using the carrier 1, and so on.

Optionally, in the embodiment of the present application, the terminal device may determine one or more time frequency resources indicated by the network device through a physical control channel as the one or more time frequency resources used by the terminal device to send the service data according to a corresponding scheduling period. Alternatively, the terminal device selects one or more time frequency resources from a resources pool as the time frequency resources used to send the service data according to the corresponding scheduling period. Alternatively, the terminal device may continue to use the one or more time domain resources in the previous scheduling period as the time domain resources used in the current scheduling period.

Optionally, in the embodiment of the present application, the network device may first configure the value of the adjustment offset to the terminal device, but does not activate the terminal device to adjust the duration of the currently used scheduling period. An activation message is sent instead when the scheduling period needs to be adjusted. The activation message is used to instruct the terminal device to adjust the current scheduling period, to obtain another scheduling period, and send the service data according to the adjusted scheduling period. Optionally, in the embodiment of the present application, the activation message may further indicate the above-mentioned time frequency resources used to transmit service data according to the adjusted scheduling period.

Optionally, the activation message may be physical signaling or MAC signaling. Therefore, in the embodiment of the present application, the network device may rapidly trigger, through the physical signaling or the MAC signaling according to requirements, the terminal device to adjust the scheduling period. For example, upon the network device determines that a resource conflict occurs between service data of multiple terminal devices, the network device activates all or some terminal devices to adjust the current scheduling period. Therefore, in the embodiment of the present application, corresponding configuration can be rapidly triggered as required, thus ensuring service transmission quality.

Optionally, the network device may send configuration parameters (for example, the time domain resources, the scheduling period, the value of the adjustment offset, the resource pool, and the like) to the terminal device by using control signaling, such as Radio Resource Control (RRC) signaling or MAC signaling; or pre-configure the configuration parameters to the terminal device in another prearranged manner.

Optionally, in the embodiment of the present application, the configuration message is carried in a system broadcast message or a dedicated message.

Optionally, in the embodiment of the present application, the terminal device determines that a resource conflict occurs between first data of a first service and data of a second service at a first time domain sending position. The terminal device determines an adjustment offset, and adjusts a first scheduling period based on the adjustment offset, to obtain a second scheduling period. The terminal device determines a second time domain sending position according to the second scheduling period, and sends the first data at the second time domain sending position. In this case, a data sending end of the terminal device may be a terminal device, or may also be a network device.

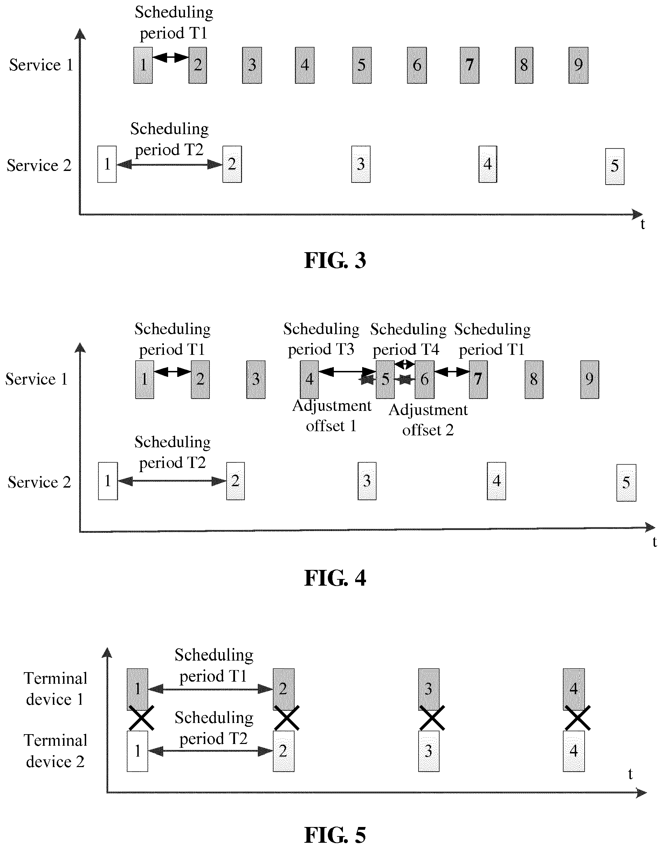

For example, as illustrated in FIG. 2, for a service 1 and a service 2 of a particular terminal device, data is sent according to a corresponding scheduling period (the service 1 corresponds to a scheduling period T1, and the service 2 corresponds to a scheduling period T2). A resource conflict occurs between data 5 of the service 1 and data 3 of the service 2. For example, as illustrated in FIG. 3, the terminal device may adjust the scheduling period T1 of the service 1. The terminal device may first determine an adjustment offset 1; then adjust the scheduling period T1 to a scheduling period T3 according to the adjustment offset 1; and send the data 5 of the service 1 according to the scheduling period T3.

Optionally, in the embodiment of the present application, the terminal device may determine an adjustment offset of a scheduling period of each service according to a priority order of services having a resource conflict, that is, according to a backoff order of the service transmission data. The network device may configure a priority order of the services and the value of the adjustment offset to the terminal device.

For example, as illustrated in FIG. 3, a priority of the service 1 is lower than that of the service 2. Therefore, data of the service 2 may be transmitted according to an original scheduling period, while as for the service 1, duration corresponding to the adjustment offset 1 may be performed a backoff.

Optionally, in the embodiment of the present application, the network device may also directly configure an adjustment offset corresponding to each service to the terminal device. Then, when a resource conflict occurs between services, the terminal device adjusts a scheduling period of each service according to the adjustment offset configured by the network device.

The resource conflict and a resource collision mentioned in the embodiment of the present application refer to the following situation: the same resource is used to send data, and thus a receiving end cannot acquire data packets sent by using the same resource. The resource may be a time frequency resource, a time-frequency code-domain resource, or a time-frequency code spatial resource, which may specifically make reference to a dimension of resources used to send a data packet.

Optionally, in the embodiment of the present application, after the first data of the first service is sent according to the second scheduling period, a third scheduling period may be determined, and then second data of the first service is sent according to the third scheduling period. A difference value between the first scheduling period and the third scheduling period is equal to that between the second scheduling period and the first scheduling period, and the second data is data sent for the first time after the first data.

For example, as illustrated in FIG. 3, after the data 5 of the service 1 is sent according to the scheduling period T3, a scheduling period T4 may be determined. A difference value between the scheduling periods T1 and T3 may be equal to that between the scheduling periods T4 and T3. Then, data 6 of the service 1 is sent according to an adjusted scheduling period.

Optionally, in the embodiment of the present application, after the second data of the first service is sent, third data of the first service is send according to the first scheduling period, where the third data is data sent after the second data.

For example, as illustrated in FIG. 3, after the data 6 of the service 1 is sent according to the scheduling period T4, data after the data 6, for example, data 7, data 8 and data 9, may be sent according to the scheduling period T1.

Optionally, the terminal device may determine the adjustment offset within a configured value range of the adjustment offset. The same value range may be configured for different terminal devices, and each terminal device may randomly select the adjustment offset from the value range. In such a case, the network device may send an activation message to the terminal device, where the activation message is used to activate the terminal device to adjust a current scheduling period. Then, the terminal device may select the adjustment offset from the configured value range. In this case, a data receiving end of the terminal device may be a network device, or may also be another terminal device.

Alternatively, the network device may configure an adjustment offset with only one value, and the network device adjusts the scheduling period according to this value. Specifically, the scheduling period may be adjusted after the activation message sent by the network device is received.

For example, in the case that there is no system coverage or the system cannot indicate a corresponding resource by using control signaling, a resource conflict may constantly occur between periods of the same service of the terminals. For example, as illustrated in FIG. 5, a collision occurs constantly between the scheduling periods of the terminal devices 1 and 2. Thus, the terminal device may randomly select an adjustment offset from the value range of the adjustment offset, to adjust the current scheduling period, instead of performing service transmission only according to the preset initial scheduling period.

Optionally, in the embodiment of the present application, the terminal device may send indication information, where the indication information is used to indicate a value of the adjustment offset selected by the terminal device. The indication information may be sent in the following manner.

The indication information is carried in a physical control channel. For example, the indication information may be physical control information, such as a Scheduling Assignment (SA) in LTE D2D transmission.

Alternatively, the indication information is carried in a reserved bit of a physical channel. For example, n-bit information is reserved after the sent data or control signaling to indicate values of possible 2^n adjustment offsets.

Alternatively, the indication information is carried in a specific MAC CE.

Alternatively, the indication information is carried in a system broadcast message.

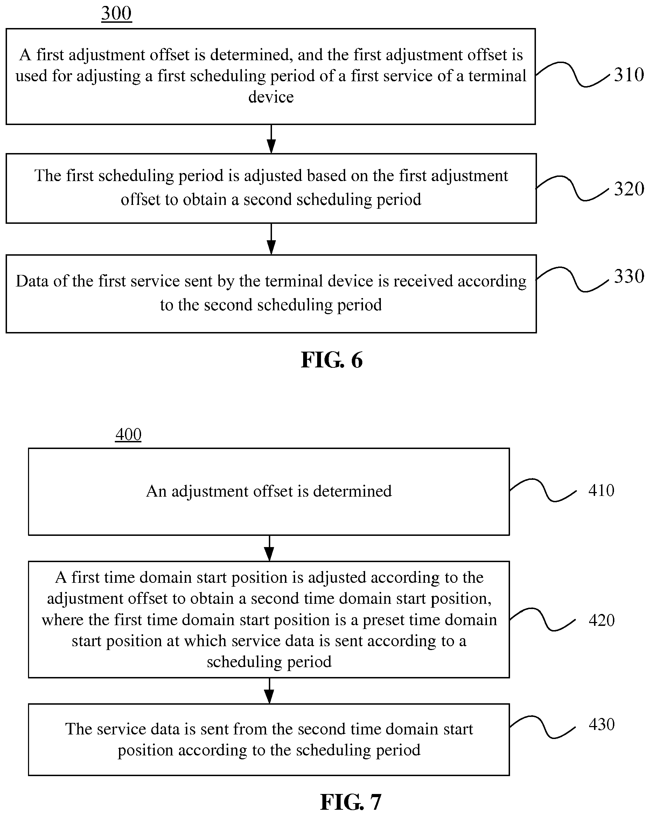

The service transmission method 100 according to the embodiment of the present application has been described above by using a service data sending end in FIG. 1 to FIG. 5 as an example. The following with describe a service transmission method according to an embodiment of the present application by using a service data receiving end in FIG. 6 as an example.

FIG. 6 is a schematic flowchart of a service transmission method 300 according to an embodiment of the present application. As illustrated in FIG. 6, the method 300 may include the following operations.

In 310, an adjustment offset is determined, and the adjustment offset is used for adjusting a first scheduling period of a first service of a terminal device.

In 320, the first scheduling period is adjusted to obtain a second scheduling period based on the adjustment offset.

In 330, data of the first service sent by the terminal device is received according to the second scheduling period.

It should be understood that, an execution subject (that is, a receiving end) of the method 300 may be a terminal device, or may also be a network device (for example, a base station).

In the embodiment of the present application, the scheduling period may be referred to as a semi-persistent scheduling period or a semi-static scheduling period.

At a data receiving end, the scheduling period may also be referred to as a receiving period, which means a time interval between receiving two adjacent data packets.

Optionally, in the embodiment of the present application, the receiving end may receive indication information sent by a sending end, and determine the adjustment offset by reading the indication information, where the indication information indicates the adjustment offset used by the sending end.

The indication information is carried in a physical control channel. For example, the indication information may be an SA in LTE D2D transmission.

Alternatively, the indication information is carried in a reserved bit of a physical channel. For example, n-bit information is reserved after the sent data to indicate values of possible 2^{∧n} adjustment offsets.

Alternatively, the indication information is carried in a specific MAC CE.

Alternatively, the indication information is carried in a system broadcast message. The receiving end may determine the adjustment offset by using a configuration information element in the system broadcast message.

Optionally, in the embodiment of the present application, the receiving end may also not determine the adjustment offset and the corresponding scheduling period, but detect all resources in a resource pool corresponding to the sending end to receive the data sent by the sending end. The resource pool corresponding to the sending end may be a resource pool from which the sending end selects a resource to send data of a service. That is, the terminal device may detect all data sending positions to acquire data from the sending end.

It should be understood that, in the embodiment of the present application, the receiving end of the service data is a terminal device. For configuration of a scheduling period of the terminal device, configuration of a resource pool, configuration of time domain resources used to receive data according to the scheduling period, reference may be made to description of a sending end of the service data. For brevity, details are not repeated herein.

Therefore, in the embodiment of the present application, the terminal device determines an adjustment offset, adjusts a scheduling period based on the adjustment offset to obtain another scheduling period, and then transmits service data according to the newly obtained scheduling period, thus avoiding a resource conflict between difference services.

FIG. 7 is a schematic flowchart of a service transmission method 400 according to an embodiment of the present application.

In 410, an adjustment offset is determined.

In 420, a first time domain start position is adjusted according to the adjustment offset to obtain a second time domain start position, where the first time domain start position is a preset time domain start position at which service data is sent according to a scheduling period.

In 430, the service data is sent from the second time domain start position according to the scheduling period.

In the embodiment of the present application, the method 400 may be executed by a terminal device. A receiving end of the service data may be the terminal device, or may also be a network device.

Optionally, the network device may preset, for the terminal device, a time domain start position at which the service data is sent according to a scheduling period, and instruct the terminal device to send the service data from the time domain start position according to the scheduling period. However, because the problem illustrated in FIG. 5 that a constant resource collision occurs between different terminal devices probably occurs, the terminal device may determine the adjustment offset before sending the service data, adjust the preset time domain start position according to the adjustment offset to obtain another time domain start position, and send the service data according to the scheduling period from the newly determined time domain start position.

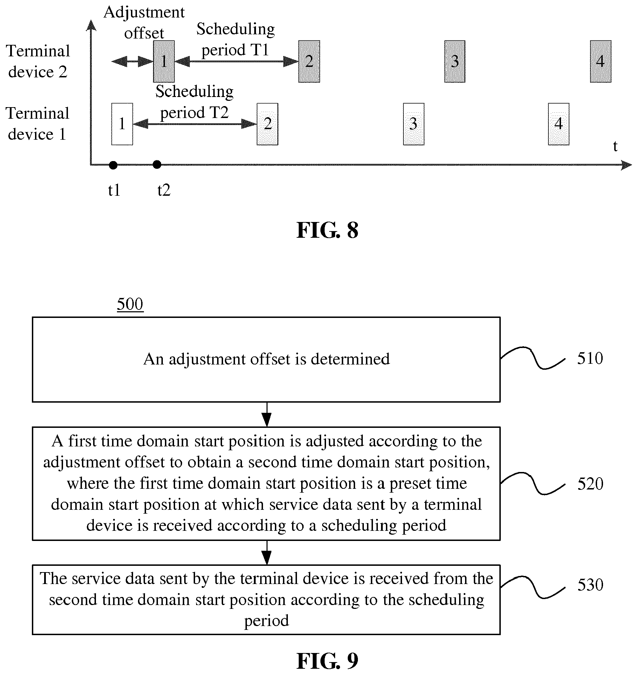

For example, as illustrated in FIG. 8, a terminal device 1 and a terminal device 2 have the same scheduling period T1 and the time domain start position t1, and therefore a resource collision may occur therebetween. The terminal device 1 may determine an adjustment offset, and adjust the time domain start position according to the adjustment offset. For example, the terminal device 1 adjusts the time domain start position from t1 to t2, thus avoiding the resource collision.

In the embodiment of the present application, the network device may configure specific terminal devices that are required to adjust the time domain start position. For example, the network device configures that the terminal device 1 adjusts the time domain start position, while the terminal device 2 does not adjust the time domain start position.

Optionally, the terminal device may determine the adjustment offset within a configured value range of the adjustment offset. The same value range may be configured for different terminal devices, and the terminal devices may randomly select the adjustment offset from the value range.

Alternatively, the network device may configure an adjustment offset with only one value, and the terminal device adjusts the time domain start position according to this value.

Optionally, in the embodiment of the present application, the value of the adjustment offset may use a time slot as a unit, or may also use a sub-frame as a unit.

Optionally, in the embodiment of the present application, before the terminal device sends data of a service according to a scheduling period, the terminal device may first determine one or more time frequency resources to be used, where the one or more time frequency resources are used to indicate one or more frequency domain resources used to send the service and one or more time domain resources in sub-frames corresponding to the scheduling period of the service. For example, the terminal device determines that a carrier 1 and a time slot 1 are used to send the data of the service, and that a time domain interval corresponding to a current scheduling period is five sub-frames. As such, the terminal device may send the data of the service in the time slot 1 of the first sub-frame by using the carrier 1, and then send the data of the service in a time slot 6 of the sixth sub-frame by using the carrier 1, and so on.

Optionally, in the embodiment of the present application, the terminal device may determine one or more time frequency resources indicated by the network device through a physical control channel as the one or more time frequency resources used by the terminal device to send the service data according to a corresponding scheduling period. Alternatively, the terminal device selects one or more time frequency resources from a resource pool as the time frequency resources used to send the service data according to the corresponding scheduling period.

Optionally, in the embodiment of the present application, the terminal device may send indication information, where the indication information is used to indicate a value of the adjustment offset selected by the terminal device. The indication information may be sent in the following manner.

The indication information is carried in a physical control channel. For example, the indication information may be physical control information, such as an SA in LTE D2D transmission.

Alternatively, the indication information is carried in a reserved bit of a physical channel. For example, n-bit information is reserved after the sent data or control signaling to indicate values of possible 2^n adjustment offsets.

Alternatively, the indication information is carried in a specific MAC CE.

Alternatively, the indication information is carried in a system broadcast message.

FIG. 9 is a schematic flowchart of a service transmission method 500 according to an embodiment of the present application. The method is executed by a communication device. As illustrated in FIG. 9, the method 500 may include the following operations.

In 510, an adjustment offset is determined.

In 520, a first time domain start position is adjusted according to the adjustment offset to obtain a second time domain start position, where the first time domain start position is a preset time domain start position at which service data sent by a terminal device is received according to a scheduling period.

In 530, the service data sent by the terminal device is received from the second time domain start position according to the scheduling period.

Optionally, the communication device may receive indication information sent by the terminal device. The indication information is used to indicate a value of the adjustment offset, and the terminal device may determine the adjustment offset according to the indication information. The indication information is carried in a physical control channel. For example, the indication information may be physical control information, such as an SA in LTE D2D transmission. Alternatively, the indication information is carried in a reserved bit of a physical channel. For example, n-bit information is reserved after the sent data or control signaling to indicate values of possible 2^n adjustment offsets. Alternatively, the indication information is carried in a specific MAC CE. Alternatively, the indication information is carried in a system broadcast message.

Optionally, the communication device (that is, a receiving end of the service data) may be a terminal device; or may also be a network device, for example, a base station.

It should be understood that, in the embodiment of the present application, the receiving end of the service data is a terminal device. For configuration of a scheduling period of the terminal device, configuration of a resource pool, configuration of a time domain resource used to receive data according to the scheduling period, reference may be made to description of a sending end of the service data. For brevity, details are not repeated herein.

Therefore, in the embodiment of the present application, a time domain start position of data transmission is adjusted, thus avoiding a resource conflict between different terminals.

It should be understood that, in the embodiment of the present application, as for a terminal device, a resource collision probably occurs between multiple services transmitted by the terminal device; or a resource collision probably occurs between this terminal device and another terminal device. As such, the terminal device may use the methods 200 and 400 at the same time. For example, supposing that the terminal device needs to transmit service 1 and service 2, the terminal device may adjust a time domain start position of the service 1 and/or the service 2 by using the method 400 before sending the service 1 and the service 2, and adjust a scheduling period of the service 1 and/or the service 2 by using the method 200 if there is a resource collision between the service 1 and the service 2 during transmission of the services. The receiving end performs the similar processing.

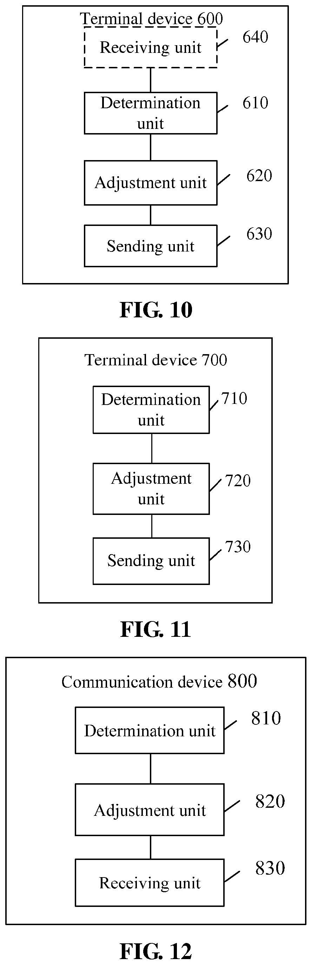

The service transmission method according to the embodiments of the present application has been described above In combination with FIG. 1 to FIG. 9. The following will describe an apparatus for implementing the service transmission method In combination with FIG. 10 to FIG. 17.

FIG. 10 is a schematic block diagram of a terminal device 600 according to an embodiment of the present application. As illustrated in FIG. 10, the terminal device 600 includes the following units.

A determination unit 610 is configured to determine an adjustment offset for adjusting a first scheduling period of a first service of the terminal device.

An adjustment unit 620 is configured to adjust the first scheduling period based on the adjustment offset to obtain a second scheduling period.

A sending unit 630 is configured to send data of the first service according to the second scheduling period.

Optionally, before determining the adjustment offset, the determination unit 610 is further configured to determine that a resource conflict occurs between first data of the first service and data of a second service at a first time domain sending position.

The sending unit 630 is specifically configured to determine a second time domain sending position according to the second scheduling period, and send the first data at the second time domain sending position.

Optionally, the determination unit 610 is specifically configured to determine the adjustment offset according to a priority level of the first service between the first service and the second service.

Optionally, the determination unit 610 is further configured to determine a third scheduling period, where a difference value between the first scheduling period and the third scheduling period is equal to that between the second scheduling period and the first scheduling period.

The sending unit 630 is further configured to send second data of the first service according to the third scheduling period, where the second data is data that is sent for the first time after the first data.

Optionally, the sending unit 630 is further configured to send third data of the first service according to the first scheduling period after the second data is sent, where the third data is data sent after the second data.

Optionally, as illustrated in FIG. 10, the terminal device 600 further includes the following units.

A receiving unit 640 is configured to receive a first configuration message sent by a network device, where the first configuration message is used to indicate at least one of the following: a value of the adjustment offset, or the adjustment offset is applied in a first application.

Optionally, the receiving unit 640 illustrated in FIG. 10 is configured to receive a second configuration message sent by the network device, where the second configuration message is used to indicate at least one of the following: a priority order of the first service and the second service, or a value of the adjustment offset.

Optionally, the receiving unit 640 illustrated in FIG. 10 is configured to receive an activation message sent by the network device, where the activation message is used to activate the terminal device to adjust the first scheduling period.

Optionally, the determination unit 610 is further configured to: determine one or more first time frequency resources used to send the data of the first service according to the second scheduling period, such that the data of the first service is sent according to the second scheduling period by using the one or more first time frequency resources, where the one or more first time frequency resources include one or more frequency domain resources used to send the data of the first service according to the second scheduling period and one or more time domain resources in sub-frames corresponding to the second scheduling period.

Optionally, the determination unit 610 is specifically configured to:
determine one or more time frequency resources sent by the network device in a physical downlink control channel as the first time frequency resources; or
select the first time frequency resources from a resource pool; or
determine one or more second time frequency resources as the first time frequency resources, where the second time frequency resources include one or more frequency domain resources used to send the data of the first service according to the first scheduling period and one or more time domain resources in sub-frames corresponding to the first scheduling period.

Optionally, the sending unit 630 is further configured to send indication information to a receiving end of the data of the first service, where the indication information is used to indicate the value of the adjustment offset; and
the indication information is carried in a physical control channel; or
the indication information is carried in a reserved bit of a physical channel; or
the indication information is carried in a specific MAC CE; or
the indication information is carried in a system broadcast message.

It should be understood that, the terminal device 600 in the embodiment of the present application may correspond to the terminal device for performing the method 200 in the embodiment of the present application, and the foregoing operations and/or functions of the units of the terminal device 200 may be used to perform processes and/or steps corresponding to the terminal device in the method embodiment. Details are not described herein to avoid repetition.

FIG. 11 is a schematic block diagram of a terminal device 700 according to an embodiment of the present application. As illustrated in FIG. 11, the terminal device 700 includes the following units.

A determination unit 710 is configured to determine an adjustment offset.

An adjustment unit 720 is configured to adjust a first time domain start position according to the adjustment offset to obtain a second time domain start position, where the first time domain start position is a preset time domain start position at which service data is sent according to a scheduling period.

A sending unit 730 is configured to send the service data from the second time domain start position according to the scheduling period.

Optionally, the determination unit 710 is specifically configured to determine the adjustment offset from a value range, where the value range includes multiple values.

Optionally, the sending unit 730 is specifically configured to send indication information to a receiving end of the service data, where the indication information is used to indicate a value of the adjustment offset; and
the indication information is carried in a physical control channel; or
the indication information is carried in a reserved bit of a physical channel; or
the indication information is carried in a specific MAC CE; or
the indication information is carried in a system broadcast message.

It should be understood that, the terminal device 700 in the embodiment of the present application may correspond to the terminal device for performing the method 400 in the embodiment of the present application, and the foregoing operations and/or functions of the units of the terminal device 700 may be used to perform processes and/or steps corresponding to the terminal device in the method embodiment. Details are not described herein to avoid repetition.

FIG. 12 is a schematic block diagram of a communication device 800 according to an embodiment of the present application. As illustrated in FIG. 12, the communication device 800 includes the following units.

A determination unit 810 is configured to determine an adjustment offset for adjusting a first scheduling period of a first service of a terminal device.

An adjustment unit 820 is configured to adjust the first scheduling period based on the adjustment offset to obtain a second scheduling period.

A receiving unit 830 is configured to receive, according to the second scheduling period, data of the first service sent by the terminal device.

Optionally, before the determination unit 810 determines the adjustment offset, the receiving unit 830 is further configured to receive indication information sent by the terminal device, where the indication information is used to indicate a value of the adjustment offset; and
the indication information is carried in a physical control channel; or
the indication information is carried in a reserved bit of a physical channel; or
the indication information is carried in a specific MAC CE; or
the indication information is carried in a system broadcast message.

The operation of determining the adjustment offset includes: determining the adjustment offset according to the indication information.

It should be understood that, the communication device 800 in the embodiment of the present application may correspond to the communication device for performing the method 300 in the embodiment of the present application, and the foregoing operations and/or functions of the units of the communication device 300 may be used to perform processes and/or steps corresponding to the terminal device in the method embodiment. Details are not described herein to avoid repetition.

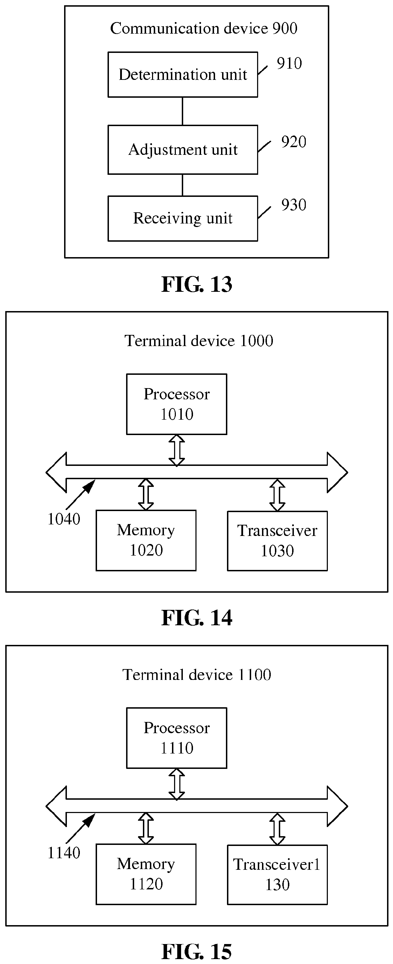

FIG. 13 is a schematic block diagram of a communication device 900 according to an embodiment of the present application. As illustrated in FIG. 13, the communication device 900 includes the following units.

A determination unit 910 is configured to determine an adjustment offset.

An adjustment unit 920 is configured to adjust a first time domain start position according to the adjustment offset to obtain a second time domain start position, where the first time domain start position is a preset time domain start position at which service data sent by a terminal device is received according to a scheduling period.

A receiving unit 930 is configured to receive, according to the scheduling period from the second time domain start position, the service data sent by the terminal device.

Optionally, before the determination unit 910 determines the adjustment offset, the receiving unit 930 is further configured to receive indication information sent by the terminal device, where the indication information is used to indicate a value of the adjustment offset; and
the indication information is carried in a physical control channel; or
the indication information is carried in a reserved bit of a physical channel; or
the indication information is carried in a specific MAC CE; or
the indication information is carried in a system broadcast message.

The operation of determining the adjustment offset includes: determining the adjustment offset according to the indication information.

It should be understood that, the communication device 900 in the embodiment of the present application may correspond to the communication device for performing the method 500 in the embodiment of the present application, and the foregoing operations and/or functions of the units of the communication device 500 may be used to perform processes and/or steps corresponding to the terminal device in the method embodiment. Details are not described herein to avoid repetition.

FIG. 14 is a schematic block diagram of a terminal device 1000 according to an embodiment of the present application. As illustrated in FIG. 14, the terminal device 1000 includes a processor 1010, a memory 1020, and a transceiver 1030. Optionally, the terminal device further includes a bus system 1040, where the bus system is configured to mutually connect the processor 1010, the memory 1020, and the transceiver 1030. The memory 1020 is configured to store instructions. The processor 1010 is configured to invoke the instructions stored in the memory 1020 to perform the following operations.

An adjustment offset is determined, where the adjustment offset is used to adjust a first scheduling period of a first service of the terminal device.

The first scheduling period is adjusted according to the adjustment offset to obtain a second scheduling period; and

Data of the first service is sent according to the second scheduling period by using the transceiver 1030.

Optionally, the processor 1010 is configured to invoke the instructions stored in the memory 1020 to further perform the following operations: before determining the adjustment offset, determining that a resource conflict occurs between first data of the first service and data of a second service at a first time domain sending position; and after determining the second scheduling period, determining a second time domain sending position according to the second scheduling period; and sending the first data at the second time domain sending position by using the transceiver 1030.

Optionally, the processor 1010 is configured to invoke the instructions stored in the memory 1020 to further perform the following operation: determining the adjustment offset according to a priority level of the first service between the first service and the second service.

Optionally, the processor 1010 is configured to invoke the instructions stored in the memory 1020 to further perform the following operations: determining a third scheduling period, where a difference value between the first scheduling period and the third scheduling period is equal to that between the second scheduling period and the first scheduling period; and sending second data of the first service according to the third scheduling period by using the transceiver 1030, where the second data is data that is sent for the first time after the first data.

Optionally, the processor 1010 is configured to invoke the instructions stored in the memory 1020 to further perform the following operation: after the second data is sent by using the transceiver 1030, sending third data of the first service according to the first scheduling period by using the transceiver 1030, where the third data is data sent after the second data.

Optionally, the processor 1010 is configured to invoke the instructions stored in the memory 1020 to further perform the following operation: receiving, by using the transceiver 1030, a first configuration message sent by a network device, where the first configuration message is used to indicate at least one of the following: a value of the adjustment offset, or the adjustment offset is applied in a first application.

Optionally, the processor 1010 is configured to invoke the instructions stored in the memory 1020 to further perform the following operation: receiving, by using the transceiver 1030, a second configuration message sent by the network device, where the second configuration message is used to indicate at least one of the following: a priority order of the first service and the second service, or a value of the adjustment offset.

Optionally, the processor 1010 is configured to invoke the instructions stored in the memory 1020 to further perform the following operation: receiving, by using the transceiver 1030, an activation message sent by the network device, where the activation message is used to activate the terminal device to adjust the first scheduling period.

Optionally, the processor 1010 is configured to invoke the instructions stored in the memory 1020 to further perform the following operation: determining one or more first time frequency resources used to send the data of the first service according to the second scheduling period, such that the data of the first service is sent according to the second scheduling period by using the one or more first time frequency resources, where the first time frequency resources include one or more frequency domain resources for sending the data of the first service according to the second scheduling period and one or more time domain resources in sub-frames corresponding to the second scheduling period.

Optionally, the processor 1010 is configured to invoke the instructions stored in the memory 1020 to further perform the following operation: determining one or more time frequency resources sent by the network device in a physical downlink control channel as the first time frequency resources; or
selecting the first time frequency resources from a resource pool; or
determining one or more second time frequency resources as the first time frequency resources, where the one or more second time frequency resources include one or more frequency domain resources for sending the data of the first service according to the first scheduling period and one or more time domain resources in sub-frames corresponding to the first scheduling period.

Optionally, the processor 1010 is configured to invoke the instructions stored in the memory 1020 to further perform the following operation: sending, by using the transceiver 1030, indication information to a receiving end of the data of the first service, where the indication information is used to indicate the value of the adjustment offset; and
the indication information is carried in a physical control channel; or
the indication information is carried in a reserved bit of a physical channel; or
the indication information is carried in a specific MAC CE; or
the indication information is carried in a system broadcast message.

It should be understood that, the terminal device 1000 in the embodiment of the present application may correspond to the terminal device for performing the method 200 in the embodiment of the present application, and the foregoing operations and/or functions of the units of the terminal device 1000 may be used to perform processes and/or steps corresponding to the terminal device in the method embodiment. Details are not described herein to avoid repetition.

FIG. 15 is a schematic block diagram of a terminal device 1100 according to an embodiment of the present application. As illustrated in FIG. 15, the terminal device 1100 includes a processor 1110, a memory 1120, and a transceiver 1130. Optionally, the terminal device further includes a bus system 1140, where the bus system is configured to mutually connect the processor 1110, the memory 1120, and the transceiver 1130. The memory 1120 is configured to store instructions. The processor 1110 is configured to invoke the instructions stored in the memory 1120 to perform the following operations.

An adjustment offset is determined.

A first time domain start position is adjusted according to the adjustment offset to obtain a second time domain start position, where the first time domain start position is a preset time domain start position at which service data is sent according to a scheduling period.

The service data is sent from the second time domain start position according to the scheduling period by using the transceiver 1130.

Optionally, the processor 1110 is configured to invoke the instructions stored in the memory 1120 to further perform the following operation: determining the adjustment offset from a value range, where the value range includes multiple values.

Optionally, the processor 1110 is configured to invoke the instructions stored in the memory 1120 to further perform the following operation: sending indication information to a receiving end of the service data by using the transceiver 1130, where the indication information is used to indicate a value of the adjustment offset; and
the indication information is carried in a physical control channel; or
the indication information is carried in a reserved bit of a physical channel; or
the indication information is carried in a specific MAC CE; or
the indication information is carried in a system broadcast message.

It should be understood that, the terminal device 1100 in the embodiment of the present application may correspond to the terminal device for performing the method 400 in the embodiment of the present application, and the foregoing operations and/or functions of the units of the terminal device 1100 may be used to perform processes and/or steps corresponding to the terminal device in the method embodiment. Details are not described herein to avoid repetition.

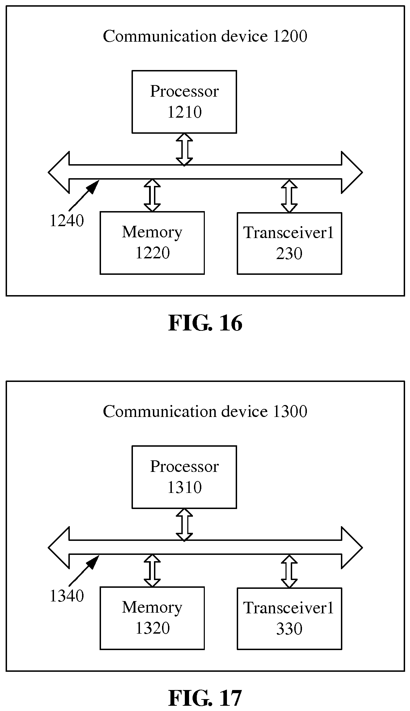

FIG. 16 is a schematic block diagram of a terminal device 1200 according to an embodiment of the present application. As illustrated in FIG. 16, the terminal device 1200 includes a processor 1210, a memory 1220, and a transceiver 1230. Optionally, the terminal device further includes a bus system 1240, where the bus system is configured to mutually connect the processor 1210, the memory 1220, and the transceiver 1230. The memory 1220 is configured to store instructions. The processor 1210 is configured to invoke the instructions stored in the memory 1220 to perform the following operations.

An adjustment offset is determined, where the adjustment offset is used to adjust a first scheduling period of a first service of the terminal device;

The first scheduling period is adjusted according to the adjustment offset to obtain a second scheduling period; and

Data of the first service sent by the terminal device is received according to the second scheduling period by using the transceiver 1230.

Optionally, the processor 1210 is configured to invoke the instructions stored in the memory 1220 to further perform the following operation: receiving, by using the transceiver 1230, indication information sent by the terminal device, where the indication information is used to indicate a value of the adjustment offset; and
the indication information is carried in a physical control channel; or
the indication information is carried in a reserved bit of a physical channel; or
the indication information is carried in a specific MAC CE; or
the indication information is carried in a system broadcast message.

The operation of determining the adjustment offset includes: determining the adjustment offset according to the indication information.

It should be understood that, the communication device 1200 in the embodiment of the present application may correspond to the communication device for performing the method 300 in the embodiment of the present application, and the foregoing operations and/or functions of the units of the communication device 1200 may be used to perform processes and/or steps corresponding to the terminal device in the method embodiment. Details are not described herein to avoid repetition.

FIG. 17 is a schematic block diagram of a terminal device 1300 according to an embodiment of the present application. As illustrated in FIG. 17, the terminal device 1300 includes a processor 1310, a memory 1320, and a transceiver 1330. Optionally, the terminal device further includes a bus system 1340, where the bus system is configured to mutually connect the processor 1310, the memory 1320, and the transceiver 1330. The memory 1320 is configured to store instructions. The processor 1310 is configured to invoke the instructions stored in the memory 1320 to perform the following operations.

An adjustment offset is determined.

A first time domain start position is adjusted according to the adjustment offset to obtain a second time domain start position, where the first time domain start position is a preset time domain start position at which service data sent by a terminal device is received according to a scheduling period.

The service data sent by the terminal device is received from the second time domain start position by using the transceiver 1330 according to the scheduling period.

Optionally, the processor 1310 is configured to invoke the instructions stored in the memory 1320 to further perform the following operation: receiving indication information sent by the terminal device, where the indication information is used to indicate a value of the adjustment offset; and
the indication information is carried in a physical control channel; or
the indication information is carried in a reserved bit of a physical channel; or
the indication information is carried in a specific MAC CE; or
the indication information is carried in a system broadcast message.

The operation of determining the adjustment offset includes: determining the adjustment offset according to the indication information.

It should be understood that, the communication device 1300 in the embodiment of the present application may correspond to the communication device for performing the method 500 in the embodiment of the present application, and the foregoing operations and/or functions of the units of the communication device 1300 may be used to perform processes and/or steps corresponding to the terminal device in the method embodiment. Details are not described herein to avoid repetition.

Those of ordinary skill in the art may be aware that units and algorithm steps in examples described In combination with the embodiments disclosed herein can be implemented as electronic hardware or a combination of computer software and electronic hardware. Whether these functions are implemented in hardware or software depends on the specific application of the technical solution and design constraints. Those skilled in the art may use different methods to implement the described functions for each specific application, but such implementation should not be considered to be beyond the scope of the present application.

Those skilled in the art can clearly understand that, for convenience and brevity of description, reference is made to corresponding processes in the foregoing method embodiments for specific working processes of the above-described systems, apparatuses, and units. Details are not described herein.

In several embodiments provided herein, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In other respects, the inter-coupling or direct coupling or communication connection illustrated or discussed may be indirect coupling or communication connection through some interfaces, apparatuses, or units; or may be implemented in electrical, mechanical, or other forms.

The units described as separate parts may or may not be physically separate. Parts displayed as units may or may not be physical units, which may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

The functions, if implemented in the form of a software functional unit and sold or used as a stand-alone product, may be stored in a computer-readable storage medium. Based on this understanding, the technical solution of the present application essentially, or a part contributing to the prior art, may be embodied in a form of a software product. The computer software product is stored on a storage medium, and includes several instructions to enable a terminal device (may be a personal computer, a server, or a network device) to execute all or some operations of the method according to the embodiments of the present application. The foregoing storage medium includes: any medium that can store program code, such as a USB flash disk, a removable hard disk, a read-only memory (ROM), a random access memory (RAM), a magnetic disk, or an optical disc.

The above merely describes specific embodiments of the present application, but the protection scope of the present application is not limited thereto. Any person skilled in the art can easily conceive modifications or replacements within the technical scope of the present application, and these modifications or replacements shall fall within the protection scope of the present application. Therefore, the protection scope of the present application should be subject to the protection scope of the claims.

## Claims

1. A service transmission method, comprising:
determining, by a terminal device, an adjustment offset for adjusting a first scheduling period of a first service of the terminal device;
adjusting, by the terminal device, the first scheduling period to obtain a second scheduling period based on the adjustment offset; and
sending, by the terminal device, data of the first service according to the second scheduling period.

2. The method according to claim 1, wherein
before determining, by the terminal device, the adjustment offset, the method further comprises:
determining that a resource conflict occurs between first data of the first service and data of a second service at a first time domain sending position; and
sending, by the terminal device, the data of the first service according to the second scheduling period comprises:
determining a second time domain sending position according to the second scheduling period; and
sending the first data at the second time domain sending position.

3. The method according to claim 2, wherein determining, by the terminal device, the adjustment offset comprises:
determining, by the terminal device, the adjustment offset according to a priority level of the first service between the first service and the second service.

4. The method according to claim 2 or 3, further comprising:
determining a third scheduling period, wherein a difference value between the first scheduling period and the third scheduling period is equal to that between the second scheduling period and the first scheduling period; and
sending second data of the first service according to the third scheduling period, wherein the second data is data sent for a first time after the first data.

5. The method according to claim 4, further comprising:
sending third data of the first service according to the first scheduling period after the second data is sent, wherein the third data is data sent after the second data.

6. The method according to any one of claims 1 to 5, further comprising:
receiving, by the terminal device, a first configuration message sent by a network device, wherein the first configuration message is configured to indicate at least one of the following: a value of the adjustment offset, or the adjustment offset is applied in a first application.

7. The method according to any one of claims 3 to 5, further comprising:
receiving, by the terminal device, a second configuration message sent by a network device, wherein the second configuration message is configured to indicate at least one of the following: a priority order of the first service and the second service, or a value of the adjustment offset.

8. The method according to any one of claims 1 to 7, wherein before determining, by the terminal device, the adjustment offset, the method further comprises:
receiving, by the terminal device, an activation message sent by the network device, wherein the activation message is configured to activate the terminal device to adjust the first scheduling period.

9. The method according to any one of claims 1 to 8, wherein before determining, by the terminal device, the adjustment offset, the method further comprises:
determining, by the terminal device, a first time frequency resource for sending the data of the first service according to the second scheduling period, to send the data of the first service according to the second scheduling period by using the first time frequency resource, wherein the first time frequency resource comprises a frequency domain resource for sending the data of the first service according to the second scheduling period and a time domain resource in a sub-frame corresponding to the second scheduling period.

10. The method according to claim 9, wherein determining, by the terminal device, the first time frequency resource for sending the data of the first service according to the second scheduling period comprises:
determining, by the terminal device, a time frequency resource sent by the network device in a physical downlink control channel as the first time frequency resource; or
selecting, by the terminal device, the first time frequency resource from a resource pool; or
determining, by the terminal device, a second time frequency resource as the first time frequency resource, wherein the second time frequency resource comprises a frequency domain resource for sending the data of the first service according to the first scheduling period and a time domain resource in a sub-frame corresponding to the first scheduling period.

11. The method according to any one of claims 1 to 10, further comprising:
sending, by the terminal device, indication information to a receiving end of the data of the first service, wherein the indication information is configured to indicate a value of the adjustment offset; and wherein
the indication information is carried in a physical control channel; or
the indication information is carried in a reserved bit of a physical channel; or
the indication information is carried in a specific Media Access Control, MAC, control element, CE; or
the indication information is carried in a system broadcast message.

12. A service transmission method, comprising:
determining, by a terminal device, an adjustment offset;
adjusting, by the terminal device, a first time domain start position to obtain a second time domain start position according to the adjustment offset, wherein the first time domain start position is a preset time domain start position at which service data is sent according to a scheduling period; and
sending, by the terminal device, the service data from the second time domain start position according to the scheduling period.

13. The method according to claim 12, wherein determining, by the terminal device, the adjustment offset comprises:
determining the adjustment offset from a value range, wherein the value range comprises multiple values.

14. The method according to claim 12 or 13, further comprising:
sending, by the terminal device, indication information to a receiving end of the service data, wherein the indication information is configured to indicate a value of the adjustment offset; and wherein
the indication information is carried in a physical control channel; or
the indication information is carried in a reserved bit of a physical channel; or
the indication information is carried in a specific Media Access Control, MAC, control element, CE; or
the indication information is carried in a system broadcast message.

15. A service transmission method, comprising:
determining an adjustment offset for adjusting a first scheduling period of a first service of a terminal device;
adjusting the first scheduling period to obtain a second scheduling period according to the adjustment offset; and
receiving, according to the second scheduling period, data of the first service sent by the terminal device.

16. The method according to claim 15, wherein before determining the adjustment offset, the method further comprises:
receiving indication information sent by the terminal device, wherein the indication information is configured to indicate a value of the adjustment offset; and wherein
the indication information is carried in a physical control channel; or
the indication information is carried in a reserved bit of a physical channel; or
the indication information is carried in a specific Media Access Control, MAC, control element, CE; or
the indication information is carried in a system broadcast message; and
determining the adjustment offset comprises: determining the adjustment offset according to the indication information.

17. A service transmission method, comprising:
determining an adjustment offset;
adjusting a first time domain start position to obtain a second time domain start position according to the adjustment offset, wherein the first time domain start position is a preset time domain start position at which service data sent by a terminal device is received according to a scheduling period; and
receiving, according to the scheduling period from the second time domain start position, the service data sent by the terminal device.

18. The method according to claim 17, wherein before determining the adjustment offset, the method further comprises:
receiving indication information sent by the terminal device, wherein the indication information is configured to indicate a value of the adjustment offset; and wherein
the indication information is carried in a physical control channel; or
the indication information is carried in a reserved bit of a physical channel; or
the indication information is carried in a specific Media Access Control, MAC, control element, CE; or
the indication information is carried in a system broadcast message; and
determining the adjustment offset comprises: determining the adjustment offset according to the indication information.

19. A terminal device, comprising:
a determination unit, configured to determine an adjustment offset for adjusting a first scheduling period of a first service of the terminal device;
an adjustment unit, configured to adjust the first scheduling period to obtain a second scheduling period based on the adjustment offset; and
a sending unit, configured to send data of the first service according to the second scheduling period.

20. The terminal device according to claim 19, wherein
before determining the adjustment offset, the determination unit is further configured to determine that a resource conflict occurs between first data of the first service and data of a second service at a first time domain sending position; and
the sending unit is specifically configured to determine a second time domain sending position according to the second scheduling period, and send the first data at the second time domain sending position.

21. The terminal device according to claim 20, wherein the determination unit is specifically configured to:
determine the adjustment offset according to a priority level of the first service between the first service and the second service.

22. The terminal device according to claim 20 or 21, wherein
the determination unit is further configured to determine a third scheduling period, wherein a difference value between the first scheduling period and the third scheduling period is equal to that between the second scheduling period and the first scheduling period; and
the sending unit is further configured to send second data of the first service according to the third scheduling period, wherein the second data is data sent for a first time after the first data.

23. The terminal device according to claim 22, wherein the sending unit is further configured to:
send third data of the first service according to the first scheduling period after the second data is sent, wherein the third data is data sent after the second data.

24. The terminal device according to any one of claims 19 to 23, further comprising:
a receiving unit, configured to receive a first configuration message sent by a network device, wherein the first configuration message is configured to indicate at least one of the following: a value of the adjustment offset, or the adjustment offset is applied in a first application.

25. The terminal device according to any one of claims 21 to 23, further comprising:
a receiving unit, configured to receive a second configuration message sent by a network device, wherein the second configuration message is configured to indicate at least one of the following: a priority order of the first service and the second service, or a value of the adjustment offset.

26. The terminal device according to any one of claims 19 to 25, further comprising:
a receiving unit, configured to receive an activation message sent by the network device, wherein the activation message is configured to activate the terminal device to adjust the first scheduling period.

27. The terminal device according to any one of claims 19 to 26, wherein the determination unit is further configured to: determine a first time frequency resource for sending the data of the first service according to the second scheduling period, to send the data of the first service according to the second scheduling period by using the first time frequency resource, wherein the first time frequency resource comprises a frequency domain resource for sending the data of the first service according to the second scheduling period and a time domain resource in a sub-frame corresponding to the second scheduling period.

28. The terminal device according to claim 27, wherein the determination unit is specifically configured to:
determine a time frequency resource sent by the network device in a physical downlink control channel as the first time frequency resource; or
select the first time frequency resource from a resource pool; or
determine a second time frequency resource as the first time frequency resource, wherein the second time frequency resource comprises a frequency domain resource for sending the data of the first service according to the first scheduling period and a time domain resource in a sub-frame corresponding to the first scheduling period.

29. The terminal device according to any one of claims 19 to 27, wherein the sending unit is further configured to:
send indication information to a receiving end of the data of the first service, wherein the indication information is configured to indicate the value of the adjustment offset; and wherein
the indication information is carried in a physical control channel; or
the indication information is carried in a reserved bit of a physical channel; or
the indication information is carried in a specific Media Access Control, MAC, control element, CE; or
the indication information is carried in a system broadcast message.

30. A terminal device, comprising:
a determination unit, configured to determine an adjustment offset;
an adjustment unit, configured to adjust a first time domain start position to obtain a second time domain start position according to the adjustment offset, wherein the first time domain start position is a preset time domain start position at which service data is sent according to a scheduling period; and
a sending unit, configured to send the service data from the second time domain start position according to the scheduling period.

31. The terminal device according to claim 30, wherein the determination unit is specifically configured to:
determine the adjustment offset from a value range, wherein the value range comprises multiple values.

32. The terminal device according to claim 31 or claim 31, wherein the sending unit is specifically configured to:
send indication information to a receiving end of the service data, wherein the indication information is configured to indicate a value of the adjustment offset; and wherein
the indication information is carried in a physical control channel; or
the indication information is carried in a reserved bit of a physical channel; or
the indication information is carried in a specific Media Access Control, MAC, control element, CE; or
the indication information is carried in a system broadcast message.

33. A communication device, comprising:
a determination unit, configured to determine an adjustment offset for adjusting a first scheduling period of a first service of a terminal device;
an adjustment unit, configured to adjust the first scheduling period to obtain a second scheduling period based on the adjustment offset; and
a receiving unit, configured to receive, according to the second scheduling period, data of the first service sent by the terminal device.

34. The communication device according to claim 33, wherein before the determination unit determines the adjustment offset, the receiving unit is further configured to receive indication information sent by the terminal device, wherein the indication information is configured to indicate a value of the adjustment offset; and wherein
the indication information is carried in a physical control channel; or
the indication information is carried in a reserved bit of a physical channel; or
the indication information is carried in a specific Media Access Control, MAC, control element, CE; or
the indication information is carried in a system broadcast message; and
determining the adjustment offset comprises: determining the adjustment offset according to the indication information.

35. A communication device, comprising:
a determination unit, configured to determine an adjustment offset;
an adjustment unit, configured to adjust a first time domain start position to obtain a second time domain start position according to the adjustment offset, wherein the first time domain start position is a preset time domain start position at which service data sent by a terminal device is received according to a scheduling period; and
a receiving unit, configured to receive, according to the scheduling period from the second time domain start position, the service data sent by the terminal device.

36. The communication device according to claim 35, wherein before the determination unit determines the adjustment offset, the receiving unit is further configured to receive indication information sent by the terminal device, wherein the indication information is configured to indicate a value of the adjustment offset; and wherein
the indication information is carried in a physical control channel; or
the indication information is carried in a reserved bit of a physical channel; or
the indication information is carried in a specific Media Access Control, MAC, control element, CE; or
the indication information is carried in a system broadcast message; and determining the adjustment offset comprises: determining the adjustment offset according to the indication information.
